**Europäisches Patentamt**

**European Patent Office**

**Office européen des brevets**

(19)

(11) Veröffentlichungsnummer: **0 228 637**
**B1**

(12) **EUROPÄISCHE PATENTSCHRIFT**

(45) Veröffentlichungstag der Patentschrift: **13.06.90**

(51) Int. Cl.⁵: **C 08 F 220/56, C 02 F 1/56**

(21) Anmeldenummer: **86117354.0**

(22) Anmeldetag: **12.12.86**

(54) Copolymere aus Acrylamid und Dimethylaminopropylacrylamid als Flockungsmittel und Verfahren zum Entwässern von Klärschlämmen unter Verwendung dieser Flockungsmittel.

(30) Priorität: **19.12.85 DE 3544909**

(43) Veröffentlichungstag der Anmeldung:
**15.07.87 Patentblatt 87/29**

(45) Bekanntmachung des Hinweises auf die
Patenterteilung:
**13.06.90 Patentblatt 90/24**

(84) Benannte Vertragsstaaten:
**AT BE CH DE FR GB IT LI LU NL SE**

(56) Entgegenhaltungen:
EP-A-0 134 756
US-A-3 014 896
US-A-3 661 868

Die Akte enthält technische Angaben, die nach
dem Eingang der Anmeldung eingereicht
wurden und die nicht in dieser Patentschrift
enthalten sind.

(73) Patentinhaber: **Chemische Fabrik Stockhausen
GmbH
Bäkerpfad 25
D-4150 Krefeld (DE)**

(72) Erfinder: **Hartan, Hans-Georg, Dr. Dipl.-Chem.
Vogelsang 171
D-4178 Kevelaer 4 (DE)**
Erfinder: **Landscheidt, Alfons, Dr. Dipl.-Chem.
Lefarthstrasse 11
D-4150 Krefeld (DE)**

(74) Vertreter: **Klöpsch, Gerald, Dr.-Ing.
An Gross St. Martin 6
D-5000 Köln 1 (DE)**

(56) Entgegenhaltungen:
**CHEMICAL ABSTRACTS, Band 102, Nr. 16, 22.
April 1985, Seite 33, Zusammenfassung Nr.
132938w, Columbus, Ohio, US; & JP-A-84 193
911
Idem**

EP 0 228 637 B1

## Beschreibung

Die Erfindung betrifft Copolymere aus Acrylamid und Dimethylaminopropylacrylamid als Flockungsmittel und ein Verfahren zum Entwässern von Klärschlämmen, die bei der mechanischen/biologischen Reinigung kommunaler und industrieller Abwässer entstehen unter Verwendung von Copolymeren aus Acrylamid und Dimethylaminopropylacrylamid als Flockungsmittel.

Mit jeder Abwasserreinigung fällt zwangsläufig Klärschlamm an. Dieser Klärschlamm besteht in Abhängigkeit vom Reinigungsprozeß zum überwiegenden Teil aus Wasser und darin dispergiertem organischen Material.

Ein typischer ausgefaulter Schlamm einer kommunalen Kläranlage hat einen Wassergehalt von 95%, davon sind ca. 70% als Hohlraumwasser, ca. 22% als Kapillarwaser und ca. 8% als Innenwasser vorhanden. Als Folge des hohen Anteils organischer Bestandteile ist ein solcher Klärschlamm durch negative Ladungen an den Partikeloberflächen stabilisiert: eine Reduzierung des Wasseranteils ist nur durch Anwendung starker physikalisch/chemischer Kräfte möglich.

Bei der maschinellen Entwässerung von feststoffhaltigen Trüben werden zur Beschleunigung der Wasserabgabe Flockungsmittel zugesetzt. Diese Flockungsmittel sind bei Feststoff/Flüssigsystemen, wie sie bei der Abwasserreinigung auftreten, in der Regel Polymere aus kationisierten Acrylsäurederivaten oder Methacrylsäureestern bzw. Copolymerisate dieser Ester aus Acrylamid.

Durch diese Flockungsmittel wird eine Destabilisierung der Feststoffteilchen durch Ladungsausgleich sowie eine Agglomeration der Feinstpartikel und damit die Bildung größerer Flocken erreicht. Das dabei frei werdende Wasser — das Hohlraum — sowie ein Teil des Kapillarwassers — kann mit den üblichen Entwässerungsmaschinen, z.b. Siebbandpressen, Zentrifugen oder Kammerfilterpressen, abgetrennt werden.

Je nach Art des Schlammes und Wahl des Entwässerungsaggregates enthält der gebildete Schlammkuchen noch 60 bis 85% Wasser.

Die zur Flockung von Klärschlämmen im allgemeinen eingesetzten Polymere auf Basis kationisierter Acrylsäure- oder Methacrylsäureester zeigen eine Reihe von Nachteilen.

Füre die Anwendung als Flockungsmittel müssen aus den Polymeren verdünnte 0,1 bis 0,3 %ige wäßrige Lösungen hergestellt werden. Diese Lösungen sind aufgrund der hydrolysenanfälligen Estergruppen nur sehr begrenzt lagerfähig.

In Lösewässern mit pH-Werten von 7,0 — 7,5 beträgt die Stabilitätsdauer bei Acrylderivaten nur einige Stunden, bei Methacrylderivaten ca. 24 Stunden.

Ein weiteres Probelm ist bei der Flockung und Entwässerung von alkalischen Klärschlämmen gegeben. Sie entstehen bei der Stabilisierung von Klärschlämmen mit Kalk oder z.B. auch bei der Erwärmung von Klärschlämmen auf ca. 80 bis 90°C. Auch hier ist ein effektiver Einsatz der erwähnten Flockungsmittel wegen der Esterhydrolyse nicht möglich.

Die üblichen Entwässerungsaggregate Zentrifuge, Siebhandpresse und Kammerfilterpresse stellen jeweils andere Anforderungen an die konventionellen Flockungsmittel. Zentrifugen erfordern aufgrund des großen Leistungseintrags, der bis zu 30.000 W/m³ Klärschlamm betragen kann, große scherstabile Flocken, die in der Regel durch extrem hochmolekulare Flockungsmittel gebildet werden. Die speziellen Anforderungen bei der Entwässerung mit Siebbandpressen werden dagegen durch druck- und walkstabile Flocken erfüllt, die bevorzugt durch Polymere mit niedrigem Polymerisationsgrad und unter Anwendung von schonenden Konditionierbedingungen mit Leistungseinträgen zwischen 100 und 400 W/m³ Klärschlamm gebildet werden.

Kammerfilterpressen wiederum erfordern druckstabile Flocken mit guter Drainierbarkeit. Dies wird mit hochmolekularen Flockungsmitteln und bei relativ schonenden Konditionierbedingungen erreicht.

Die bekannten Flockungsmittel auf der Basis von (Meth)-Acrylsäureestern sind nicht nur hydrolyseanfällig, ihre Wirksamkeit ist auch von den jeweiligen Konditionierbedingungen abhängig, d.h. Produkte, die unter Anwendung von schonenden Konditionierbedingungen mit niedrigen Leistungseinträgen ausreichende Flockungswirkung erzielen versagen bei anderen Konditionierbedingungen, die einen hohen Leistungseintrag erfordern. Die bekannten Flockungsmittel mußten daher speziell auf die jeweiligen Konditionierbedingungen zugeschnitten werden, ein universell einsetzbares Flockungsmittel für die unterschiedlichen Entwässerungsaggregate wäre zwar in hohem Maße erwünscht, war mit den bekannten Produkten jedoch bischer nicht zu realisieren.

In der US—PS 3,014,896 werden Copolymere aus Dimethylaminopropylacrylamid (DMAPAA) und Acrylamid (ACA) und ihre Verwendung als Hilfsmittel zur Schlammentwässerung beschrieben, deren erreichbare Viskosität einer 25 %igen wäßrigen Polymerlösung jedoch nur 60 mPa.s erreicht. Das DMAPAA dieser Copolymeren wird entweder mit Essigsäure, mit Salzsäure oder Schwefelsäure neutralisiert, wobei die Neutralisation mit Essigsäure jedoch bevorzugt ist, da Mineralsäuren zu lediglich niedrigmolekularen Copolymeren mit entsprechend niedriger Flockungseffektivitat führen sollen.

Aufgabe der Erfindung ist es, die bekannten Flockungsmittel derart weiterzuentwickeln , bzw. zu verbessern, daß ein von den Konditionier- bzw. Entwässerungsbedingungen unabhängiges, d.h. bei unterschiedlichen Konditionier- und Entwässerungsbedingungen gleich gut wirksames Produkt erreicht wird, das hydrolysestabil ist und daher ausreichend lagerstabil ist und sich auch zur Flockung von alkalischen Schlämmen eignet.

Diese Erfindung wird gelöst durch die Merkmale des Kennzeichens von Anspruch 1.

Die erfindungsgemäßen Copolymerisate von ACA und DMAPAA, in denen das DMAPAA entweder mit Mineralsäure neutralisiert ist oder quarterniert ist, die einen Anteil an kationischen Monomeren zwischen 4 und 80 Mol % und einen Quotienten aus Viskosität und molarem Anteil an kationischer Komponente von mindestens 200 aufweisen, sind lagerstabil, zur Flockung von alkalischen Schlämmen geeignet und weisen unter allen Konditionierbedingungen hohe Flockenstabilität und damit gute Flockungswirkung auf. Sie sind somit für Konditionierbedingungen mit Leistungseinträgen zwischen 100 und 30.000 W/m$^3$ gleichermäßen geeignet.

Die enfindungsgemäßen Copolymerisate aus ACA und mit Mineralsäuren neutralisiertem oder quaterniertem DMAPAA können nach bekannten Polymerisationsverfahren hergestellt werden. Erfindungswesentlich für die Erzielung des kritischen Quotienten aus Grenzviskosität und Molverhältnis von ACA zu DMAPAA $\geqq$ 200 ml/g ist die Reinheit des DMAPAA. Dies muß im wesentlichen frei von bifunktionellen Verbindungen sein, d.h. ihr Anteil im DMAPAA darf nur sehr gering sein. Bifunktionelle Verbindungen bewirken Vernetzungen im Polymer und führen dadurch zur Bildung von wasserunlöslichen Bestandteilen, die die Produkteffektivität bei der Anwendung beeinträchtigen. So kann zum Beispiel aus DMAPAA durch Abspaltung von Dimethylamin N-Allylacrylamid entstehen. Um Copolymere mit dem oben erwähnten Quotienten zu erhalten, darf die Menge an N-Allylacrylamid 30 ppm nicht überschreiten.

Zur Durchführung der Copolymerisation des Dimethylaminopropylacrylamids mit Acrylamid wird zunächst das Salz der basischen Monomeren mit Säuren bzw. das Umsetzungsprodukt mit quarternierenden Agentien wie z.B. Methylchlorid oder Dimethylsulfat gebildet. Anschließend wird eine wäßrige Lösung des so kationisierten Monomeren mit anteiligen Mengen Acrylamid hergestellt und durch Radikalpolymerisation polymerisiert. Die Polymerisation kann durch Redoxsysteme, z.B. dem System Natriumbisulfit/Kaliumperoxodisulfat, durch thermisch zerfallende Initiatoren wie z.B. Azo-biisobytyronitril oder auch durch photochemisch gebildete Radikale z.B. aus Benzoinisopropylether, initiiert werden.

Durch die Polymerisation wird in Abhängigkeit vom Wassergehalt eine hochviskose Lösungs, ein gummiartiges Gel oder ein spröder Feststoff erhalten.

Nach Reduzierung des Wassergehaltes auf 5—15% und Zerkleinerung werden die erfindungsgemäßen Produkte mit Korngrößen zwischen 0,1 und 1 mm erhalten.

Die Erfindung betrifft ferner die Verwendung der Copolymerisate von ACA und DMAPAA als Flockungsmittel in einem Verfahren zum Entwässern von Klärschlämmen, die bei der mechanisch/biologischen Reinigung kommunaler und industrieller Abwässer entstehen.

Für die Anwendung als Entwässerungshilfsmittel werden aus diesen Pulvern durch Einmischen in Wasser 0,1 bis 0,3 %ige Lösungen hergestellt.

Die Herstellung des Dimethylaminopropylacrylamids (DMAPAA) kann z.B. nach DE—OS 25 02 247 bzw. EP 0 070 425 durch Umsetzung von 1 Mol Acrylsäure bzw. Acrylamid mit 2 Mol Dimethylaminopropylamin und nachfolgende Pyrolyse erfolgen.

### Herstellungsbeispiel 1

Copolymerisat DMAPAA·HCL/Acrylamid (20/80 Mol %)

97 g N,N-Dimethylaminopropylacrylamid wurden in 660 g Wasser gelöst und mit 63 g %iger Salzsäure sauer gestellt. Nach Zusatz von 180 g Acrylamid wurde die Lösung auf 55°C aufgeheizt und die Polymerisation mit 100 mg Azobisisobutyronitril (AIBN) gestartet. Nach 3-stündigem Stehen wurde das gelartige Copolymerisationsprodukt zerkleinert, getrocknet und zu einem wießen Pulver zermahlen.

Viskosität (1%ige wäßr. Lösung): 1500 mPa.s

Grenzviskosität $\eta$ = 980 ml/g

Quotient ($\eta$/Molverhältnis): 245 ml/g

### Herstellungsbeispiel 2

Copolymerisat DMAPAA .CH$_3$ CL/Acrylamid (80/20 Mol%)

330 g DMAPAA . CH$_3$CL (Dimethylaminopropylacrylamid, quaterniert mit Methylchlorid) und 29 g Acrylamid wurden in 541 g Wasser mit 200 mg Azobisisobutyroamidin (AIBA) versetzt und nach Durchleiten von Stickstoff 30 min mit einer Lampe (OSRAM HWL 250 Watt) bestrahlt. Das erhaltene Gel wurde bis auf einen Restwassergehalt von 9% getrocknet und gemahlen.

Viskosität (1% wäßr. Lösung): 1200 mPa.s

Grenzviskosität $\eta$ = 57,5 ml/g

Quotient ($\eta$/Molverhältnis): 230 ml/g

### Bestimmung des Entwässerungseffektes

Prinzip:

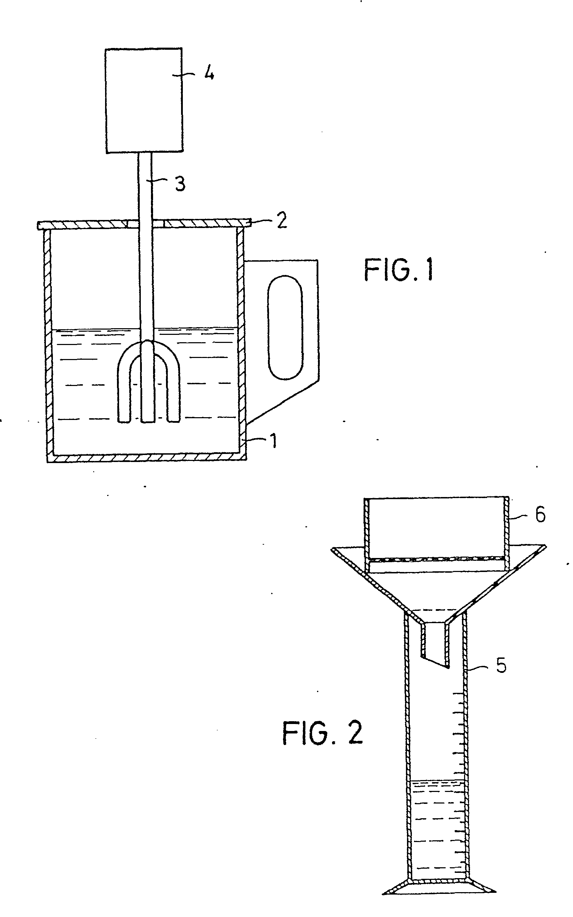

Eine Probe von Kommunalschlamm wird mit einer Lösung des zu prüfenden Flockungsmittels versetzt und in der Flockungsvorrichtung von Figur 1 definierten Scherbedingungen unterworfen. Anschließend wird die geflockte Schlammprobe wie in Figur 2 gezeigt entwässert, indem die Zeit bestimmt wird, in der eine bestimmte Menge Filtrat gewonnen wird.

Durchführung:

500 ml des Kommunalschlammes werden in das Prüfgefäß (1) mit abnehmbarem Deckel (2) gegeben und mit der abgemessenen Menge Flockungsmittellösung versetzt. Das Gefäß wird in die Rührvorrichtung (3; Vierfingerrührer) eingesetzt (siehe Figur 1), der regelbare Rührmotor (4), dessen Stromaufnahme mit einem Schreiber registriert, wird in Bewegung gesetzt und nach der Rührzeit aus dem Gerät herausgenommen. Aus der Stromaufnahme, die von der Viskosität des Schlammes und der Rührgeschwindigkeit abhängt, wird durch Differenzbildung mit der Leerstromaufnahme die zur Konditionierung eingetragene Leistung berechnet.

Die mit dem Flockungsmittel konditionierte Schlammprobe wird auf eine Sieb (6) mit Kunststoffsiebgewebe gegeben und das Filtrat in einem Meßzylinder (5) aufgefangen. Die Filtratmenge wird in Abhängigkeit von der Zeit bestimmt (siehe Figur 2).

Es wurden folgende Parameter bestimmt bzw. beurteilt:

1. Flockengröße:
   1 = sehr große Flocken
   5 = sehr kleine Flocken
   <1 = sehr große, sehr stabile Flocken

2. Filtratmenge:
   Bestimmung nach 10, 20, 30 und 60 Sekunden

3. Zentratklarheit:
   Visuelle Beurteilung
   1 = weiß, 5 = schwarz

4. Preßverhalten:
   Der Filterkuchen wurde mit der Hand gepreßt und dadurch weiter entwässert. Die Druckstabilität des so erhaltenen Schlammkuchens wurde beurteilt.
   1 = sehr gute Druckstabilität, der erhaltene Kuchen ist sehr formstabil und gibt durch Pressen weiteres Kapillarwasser gut ab.
   5 = sehr geringe Druckstabilität, Kuchen läßt sich durch Pressen in der Hand nicht weiter entwässern.

Die Ergebnisse der Flockungsversuche mit erfindungsgemäßen Flockungsmitteln (kationische Komponente: DMAPAA) und bekannten Produkten (kationische Komponente DMAEA = Dimethylaminoethylacrylat) sind in folgenden Tabellen zusammengefaßt.

Zur Verdeutlichung sind in der Tabelle die erfindungsgemäßen Beispiele als "Erfindung", die nicht zur Erfindung gehörenden Vergleichsbeispiele als "Vergleich" bezeichnet.

| Beispiel Nr. | Erfindung 1 | Erfindung 2 | Erfindung 3 | Erfindung 4 |
|---|---|---|---|---|
| Flockungsmittel kat. Komponente | DMAPAA·HCL | DMAPAA·HCL | DMAPAA·$\frac{1}{2}$ H$_2$SO$_4$ | DMAPAA·$\frac{1}{2}$ H$_2$SO$_4$ |
| Mol % | 20 | 20 | 4 | 4 |
| Quotient ($\eta$ Molverhältnis) ml/g | 245 | 245 | 200 | 200 |
| Lösungs-Konz. % | 0,1 | 0,1 | 0,1 | 0,1 |
| Zugabemenge (ppm) | 160 | 160 | 120 | 120 |
| Schlammart | A | A | B | B |
| Konditionierung Rührgeschw. (UPM) | 750 | 240 | 750 | 240 |
| Rührdauer (sec) | 10 | 60 | 10 | 60 |
| aufgen . Leistung (W/m$^3$) | 3.900 | 400 | 3.900 | 400 |
| Flockengröße | 2 | 2 | 2 | 1 |
| 1) Filtratmenge (ml) | | | | |
| nach 10 sec | 220 | 217 | 221 | 219 |
| 20 sec | 270 | 268 | 268 | 270 |
| 30 sec | 300 | 301 | 300 | 302 |
| 60 sec | 335 | 337 | 337 | 336 |
| 2) Zentratklarheit | 2 | 2 | 2 | 1 |
| 3) Preßverhalten | 1 | 1 | 2 | 2 |

A = Ilvericher Faulschlamm
   pH: 7,2   TS: 5,1%   Asche: 62,5%

B = Neersener Faulschlamm
   pH: 7,7   TS: 5,3%   Asche: 56,7%

| Beispiel Nr. | Erfindung 5 | Erfindung 6 | Erfindung 7 | Erfindung 8 |
|---|---|---|---|---|
| Flockungsmittel kat. Komponente | DMAPAA· $(CH_3)_2SO_2$ | DMAPAA· $(CH_3)_2SO_2$ | DMAPAA· $CH_3CL$ | DMAPAA· $CH_3CL$ |
| Mol % | 40 | 40 | 80 | 80 |
| Quotient (η Molverhältnis) ml/g | 270 | 270 | 230 | 230 |
| Lösungs-Konz. % | 0,1 | 0,1 | 0,1 | 0,1 |
| Zugabemenge (ppm) | 140 | 140 | 150 | 150 |
| Schlammart | C | C | D | D |
| Konditionierung Rührgeschw. (UPM) | 750 | 240 | 750 | 240 |
| Rührdauer (sec) | 10 | 60 | 10 | 60 |
| aufgen . Leistung (W/m³) | 3.900 | 400 | 3.900 | 400 |
| Flockengröße | 2 | 1 | 3 | 2 |
| 1) Filtratmenge (ml) | | | | |
| nach 10 sec | 267 | 264 | 165 | 168 |
| 20 sec | 315 | 313 | 222 | 221 |
| 30 sec | 337 | 332 | 245 | 247 |
| 60 sec | 362 | 365 | 295 | 293 |
| 2) Zentratklarheit | 3 | 2 | 3 | 3 |
| 3) Preßverhalten | 2 | 2 | 3 | 3 |

C = Krefelder Mischschlamm (Primär + Überschußschlamm)
   pH: 7,1
   TS: 4,4%
   Asche: 30,5%

D = Überschußschlamm
   pH: 7,3
   TS: 4,1%
   Asche: 23,7%

| Beispiel Nr. | Erfindung 9 | Erfindung 10 | Vergleich 11 | Vergleich 12 |
|---|---|---|---|---|
| Flockungsmittel kat. Komponente | DMAPAA·HCL | DMAPAA·HCL | DMAEA·HCL | DMAEA·HCl |
| Mol % | 20 | 20 | 20 | 20 |
| Quotient ($\eta$ Molverhältnis) ml/g | 249 | 245 | 270 | 490 |
| Lösungs-Konz. % | 0,1 | 0,1 | 0,1 | 0,1 |
| Zugabemenge (ppm) | 160 | 160 | 160 | 160 |
| Schlammart | A | A | A | A |
| Konditionierung Rührgeschw. (UPM) | 750 | 240 | 240 | 750 |
| Rührdauer (sec) | 10 | 60 | 60 | 10 |
| aufgen . Leistung (W/m$^3$) | 3.900 | 400 | 400 | 3.900 |
| Flockengröße | 2 | 1 | 5 | 5 |
| 1) Filtratmenge (ml) | | | | |
| nach 10 sec | 220 | 228 | 50 | 45 |
| 20 sec | 281 | 278 | 65 | 61 |
| 30 sec | 312 | 300 | 78 | 76 |
| 60 sec | 339 | 337 | 110 | 109 |
| 2) Zentratklarheit | 2 | 1 | 5 | 5 |
| 3) Preßverhalten | 1 | 1 | 5 | 5 |

| Beispiel Nr. | Erfindung 13 | Vergleich 14 | Vergleich 15 | Vergleich 16 |
|---|---|---|---|---|
| Flockungsmittel kat. Komponente | DMAPAA· CH₃CL | DMAEA· CH₃CL | DMAEA· HCL | DMAEA· HCL |
| Mol % | 30 | 30 | 20 | 20 |
| Quotient ($\eta$ Molverhältnis) ml/g | 260 | 470 | 270 | 270 |
| Lösungs-Konz. % | 0,1 | 0,1 | 0,1 | 0,1 |
| Zugabemenge (ppm) | 120 | 120 | 160 | 160 |
| Schlammart | E | E | A | A |
| Konditionierung Rührgeschw. (UPM) | 750 | 750 | 750 | 240 |
| Rührdauer (sec) | 10 | 10 | 10 | 60 |
| aufgen . Leistung (W/m³) | 3.900 | 3.900 | 3.900 | 400 |
| Flockengröße | 2 | 4 | 4 | 2 |
| 1) Filtratmenge (ml) | | | | |
| nach 10 sec | 165 | 90 | 170 | 215 |
| 20 sec | 215 | 123 | 218 | 267 |
| 30 sec | 250 | 148 | 245 | 298 |
| 60 sec | 298 | 195 | 292 | 334 |
| 2) Zentratklarheit | 3 | 5 | 3 | 3 |
| 3) Preßverhalten | 2 | 4 | 4 | 2 |

E = Stuttgarter Mischschlamm (Faulschlamm + Überschußschlamm)

pH-Wert: 9,2    Asche: 45,7%
TS: 4,3%    Temperatur: 70°C

| Beispiel Nr. | Vergleich 17 | Vergleich 18 | Vergleich 19 | Vergleich 20 |
|---|---|---|---|---|
| Flockungsmittel kat. Komponente | DMAEA·HCL | DMAEA·HCL | DMAPAA·HCL | DMAPAA·HCL |
| Mol % | 20 | 20 | 20 | 20 |
| Quotient ($\eta$ Molverhältnis) ml/g | 490 | 490 | 150 | 150 |
| Lösungs-Konz. % | 0,1 | 0,1 | 0,1 | 0,1 |
| Zugabemenge (ppm) | 160 | 160 | 160 | 160 |
| Schlammart | A | A | A | A |
| Konditionierung Rührgeschw. (UPM) | 750 | 240 | 750 | 240 |
| Rührdauer (sec) | 10 | 60 | 10 | 60 |
| aufgen . Leistung (W/m$^3$) | 3.900 | 400 | 3.900 | 400 |
| Flockengröße | 2 | 1 | 4 | 3 |
| 1) Filtratmenge (ml) | | | | |
| nach 10 sec | 222 | 165 | 167 | 162 |
| 20 sec | 271 | 216 | 215 | 211 |
| 30 sec | 302 | 242 | 243 | 238 |
| 60 sec | 335 | 289 | 291 | 287 |
| 2) Zentratklarheit | 2 | 2 | 4 | 3 |
| 3) Preßverhalten | 2 | 5 | 3 | 3 |

Beispiel 1) und 2) zeigen, daß ein Dimethylaminopropylacrylamid-Polymerisat mit einem Quotienten ($\eta$ /Molverhältnis) von 245 ml/g sowohl nach Konditionierung unter Anwendung eines hohen *Leistungseintrags als auch eines niedrigen Leistungseintrags ausgezeichnete Entwässerungsergebnisse* ergibt.

Im Vergleich dazu zeigten die Vergleichsbeispiele 15—18 daß Copolymerisate, die auf DMAEA basieren, in Abhängigkeit vom Quotienten ($\eta$ /Molverhältnis) entweder nur unter schwach energetischen oder nur unter stark energetischen Konditionierbedingungen gut zu bewertende Filtrationseigenschaften besitzen. Ein DMAEA-Polymer mit einem Quotienten von 160 ml/g zeigt bei einem Leistungseintrag von 3.900 W/m$^3$ ein ungenügendes Ergebnis, bei Anwendung von 400 W/m$^3$ ist es dem DMAPAA-Copolymerisat vergleichbar. Hat das DMAEA-Polymer dagegen einen Quotienten von 490, spricht es nur bei hohen Leistungseinträgen um 3.900 W/m$^3$ an und versagt bei niedrigeren Leistungs beträgen. Grund dafür ist die Ausbildung von großen Flocken mit einem ungünstigen Wasserrückhaltevermögen.

Vergleichsbeispiele 19) und 20) belegen, daß beim Unterschreiten des Quotienten ($\eta$ /Molverhältnis) unter den erfindungsgemäßen Bereich die Effektivität der DMAPAA-Polymeren absinkt.

In den Beispielen 3) und 4) wird das universelle Verhalten von DMAPAA-Copolymeren für schwächer kationische Copolymerisate mit 4 Mol% DMAPAA-Anteil belegt. Die Prüfung erfolgte hier an einem Faulschlamm, der bevorzugt auf schwach kationische Polymere anspricht.

Ein Mischschlamm aus Primär- und Überschußschlamm, der bevorzugt auf höher kationische Produkte anspricht, wurde in den Beispielen 5) und 6) verwendet. Auch hier spricht das DMAPAA-Polymer mit 40 Mol% kationischem Anteil gleichermaßen gut an.

Die Beispiele·7) und 8) wurden mit einem reinen biologischen Überschußschlamm durchgeführt. Das verwendete DMAPAA-Polymerisat hat einen Antiel von 80 Mol % kationischer Komponente. Sowohl bei schwachen wie auch bei starken Konditionierbedingungen wurden vergleichbar gute Ergebnisse erzielt.

In den Beispielen 9) bis 12) wird die Lagerbeständigkeit der 0,1 %igen Polymerlösung von DMAPAA-Polymeren in Vergleich zum entsprechenden Polymer auf Basis DMAEA nachgewiesen. Nach 24 h sind die DMAPAA-Polymerisate (Erfindungsbeispiele 9 und 10) eher noch effektiver als die frischen Lösungen, während die Polymerisate auf Basis DMAEA (Vergleichsbeispiele 11 und 12) nach 24 h keinerlei Aktivität aufweisen.

Beispiel 13) und Vergleichsbeispiel 14) demonstrieren das Verhalten von DMAPAA-Polymer im Vergleich zum DMAEA-Polymer an einem alkalisch eingestellten Schlamm. Der hohe pH-Wert resultiert aus einer Brüdenrückführung von der der Entwässerung nachgeschalteten Schlammtrocknungsanlage.

**Patentansprüche·**

1. Wasserlösliche kationische Polyelektrolyte aus Copolymeren von Acrylamid und Dimethylaminopropylacrylamid, dadurch gekennzeichnet, daß es sich
a) um Pulverprodukte handelt, daß
b) das Dimethylaminopropylacrylamid mit Mineralsäuren neutralisiert oder quaterniert ist, daß
c) der Quotient aus Grenzviskosität der Copolymeren und dem Molverhältnis von Acrylamid zu Dimethylaminopropylacrylamid mindestens 200 ml/g ist, und
d) der Anteil an kationischen Monomeren im Copolymeren zwischen 4 und 80 Mol-% beträgt.

2. Verfahren zum Entwässern von Klärschlämmen unter Verwendung von Copolymeren aus Acrylamid und Dimethylaminopropylacrylamid in Form von verdünnten wässrigen Lösungen als Flockungsmittel, dadurch gekennzeichnet, daß Copolymere aus Acrylamid und Dimethylaminopropylacrylamid verwendet werden, bei denen
a) das Dimethylaminopropylacrylamid mit Mineralsäure neutralisiert oder quaternisiert ist,
b) der Quotient aus Grenzviskosität der Copolymeren und dem Molverhältnis von Acrylamid und Dimethylaminopropylacrylamid mindestens 200 ml/g ist und
c) der Anteil des kationischen Monomeren im Copolymeren zwischen 4 und 80 Mol-% beträgt.

3. Verfahren nach Anspruch 2, dadurch gekennzeichnet, daß die Copolymere in Form von wässrigen Lösungen einer Konzentration von 0,1 bis 0,3% verwendet werden.

4. Verfahren nach Anspruch 2 oder 3, dadurch gekennzeichnet, daß die wässrigen Lösungen des Flockungsmittels durch Auflösen der festen pulverförmigen Copolymeren erhalten worden sind.

5. Verfahren zur Herstellung von wasserlöslichen pulverförmigen kationischen Polyelektrolyten nach Anspruch 1, dadurch gekennzeichnet, daß man das Dimethylaminopropylacrylamid, welches nicht mehr als 30 ppm an bifunktionellen Verbindungen enthält, insbesondere im wesentlichen frei ist von bifunktionellen Verbindungen, zunächst mit Mineralsäuren neutralisiert oder in Quaternisierungsprodukte mit mineralsaurem Anion überführt, danach die so erhaltene wässrige Lösung des kationisierten Monomeren mit anteiligen Mengen Acrylamid vermischt, die erhaltene Monomerenmischung zu Copolymerisaten mit einem Quotienten aus Viskosität und molarem Anteil an kationischer Komponente von mindestens 200 ml/g polymerisiert, trocknet und zerkleinert.

# EP 0 228 637 B1

**Revendications**

1. Polyélectrolytes cationiques, solubles dans l'eau, constitués de copolymères d'acrylamide et de diméthylaminopropyl-acrylamide, caractérisés en ce que
a) ce sont des produits pulvérulents
b) le diméthylaminopropyl-acrylamide est neutralisé ou quaternisé par des acides minéraux,
c) le quotient de la viscosité limite des copolymères par le rapport molaire entre l'acryl-amide et le diméthylaminopropyl-acrylamide est supérieur à 200 ml/g et
d) la proportion en monomères cationiques des copolymères est comprise entre 4 et 80% molaires.

2. Procédé de déshydratation de boues d'épuration d'eaux résiduaires, utilisant des copolymères d'acrylamide et de diméthylaminopropyl-acrylamide sous forme de solutions aqueuses diluées comme floculants, caractérisé en ce que l'on emploie des copolymères d'acrylamide et de diméthylaminopropyl-acrylamide, dans lesquels
a) le diméthylaminopropyl-acrylamide est neutralisé ou quaternisé par des acides minéraux.
b) la quotient de la viscosité limite des copolymères par le rapport molaire entre l'acrylamide et de diméthylaminopropyl-acrylamide est supérieur à 200 ml/g et
c) la proportion en monomères cationiques des copolymères est comprise entre 4 et 80% molaires.

3. Procédé suivant la revendication 2, caractérisé en ce que l'on utilise les copolymères sous forme de solutions aqueuses d'une concentration comprise entre 0,1 et 0,3%.

4. Procédé suivant la revendication 2 ou 3, caractérisé en ce que les solutions aqueuses de l'agent de floculation sont préparées par dissolution des copolymères solides et pulvérulents.

5. Procédé de préparation de polyélectrolytes cationiques pulvérulents, solubles dans l'eau, suivant la revendication 1, caractérisé en ce que, d'abord, on neutralise le diméthylaminopropyl-acrylamide qui ne contient pas plus de 30 ppm de composés bifonctionnels et est plus particulièrement sensiblement dépourvu de composés bifonctionnels, par un acide minéral ou le transforme en dérivés quaternisés à anion d'acide inorganique, puis on mélange la solution aqueuse ainsi obtenue du monomère cationisé à des quantités proportionnées d'acrylamide, on polymérise le mélange des monomères obtenue en copolymères à quotient de la viscosité par la proportion molaire en composant cationique supérieur à 200 ml/g, que l'on sèche et réduit en poudre.

**Claims**

1. Water-soluble, cationic polyelectrolytes consisting of copolymers of acrylamide and dimethylaminopropylacrylamide, characterized in that
a) they are powdery products, that
b) the dimethylaminopropylacrylamide is neutralized or quaternized with mineral acids, that
c) the quotient of the intrinsic viscosity of the copolymers divided by the molar ratio of acrylamide to dimethylaminopropylacrylamide is at least 200 ml/g, and
d) the proportion of cationic monomers in the copolymer is between 4 and 80 mole-%.

2. A process for dewatering sewage sludge using copolymers of acrylamide and dimethylaminopropylacrylamide in the form of diluted, aqueous solutions as flocculating agents, characterized in that copolymers of acrylamide and dimethylaminopropylacrylamide are used, in which
a) dimethylaminopropylacrylamide is neutralized with mineral acid or quaternized
b) the quotient of the intrinsic viscosity of the copolymers divided by the molar ratio of acrylamide to dimethylaminopropylacrylamide is at least 200 ml/g, and
c) the proportion of cationic monomers in the copolymer is between 4 and 80 mole-%.

3. A process according to claim 2, characterized in that the copolymers are used in the form of aqueous solutions at a concentration of 0.1 to 0.3%.

4. A process according to claims 2 or 3, characterized in that the aqueous solutions of the flocculating agent are obtained by dissolving the solid, powdery copolymers.

5. A process for the production of water-soluble, powdery, cationic polyelectrolytes according to claim 1, characterized in that the dimethylaminopropylacrylamide, which contains no more than 300 ppm of bifunctional compounds and which in particular is substantially free of bifunctional compounds, is first neutralized with mineral acids or converted with mineral acidic anions into quaternization products, that then the aqueous solution of the cationic monomer so obtained is mixed with a proportionate amount of acrylamide, the resulting mixture of monomers is polymerized to form copolymers having a quotient of viscosity divided by the molar ratio of cationic component of at least 200 ml/g, and the copolymers so formed are dried and comminuted.

11

FIG.1

FIG. 2